# EUROPÄISCHE PATENTANMELDUNG

(11) **EP 1 630 630 A1**
(43) Veröffentlichungstag der Anmeldung: **01.03.2006**
(21) Anmeldenummer: 04020045.3
(22) Anmeldetag: 24.08.2004
(51) Int. Cl.: G05B 19/05

(54) **Verfahren zur prozesssynchronen Aufbereitung von in einer zyklisch arbeitenden Steuerung vorhandenen Rohdaten**

(71) Anmelder: SIEMENS AKTIENGESELLSCHAFT, 80333 München (DE)
(72) Erfinder: Beck, Hans-Joachim, 76287 Rheinstetten (DE)

(57) **Zusammenfassung**

Ein Verfahren zur prozesssynchronen Aufbereitung von in einer zyklisch arbeitenden Steuerung vorhandenen Rohdaten, welche während eines Steuerungszyklus erfasst oder gebildet werden, ist dadurch gekennzeichnet, dass ein die Rohdaten enthaltender Operand markiert wird und ein Daten-Zugriffs-Objekt zur Verfügung gestellt wird, welches mit dem markierten Operanden verknüpft wird und mittels dem die Rohdaten des markierten Operanden aufbereitet werden.

## Beschreibung

Die Erfindung betrifft ein Verfahren nach dem Oberbegriff des Anspruchs 1, zur prozesssynchronen Aufbereitung von in einer zyklisch arbeitenden Steuerung vorhandenen Rohdaten, welche während eines Steuerungszyklus erfasst oder gebildet werden.

Beispielsweise bei frei programmierbaren Steuerungen (SPS), welche insbesondere zur Steuerung von Maschinen oder Prozessen verwendet werden, tritt häufig das Problem auf, dass Daten in einer anderen Form verwendet werden sollen, als sie in der Steuerung vorhanden sind. In der Steuerung vorliegende Rohdaten bedürfen einer in der Regel geringfügigen Aufbereitung, wobei es jedoch nahezu immer wichtig ist, dass die Aufbereitung der Daten synchron zum laufenden Prozess erfolgt. So kann beispielsweise in einer Steuerung ein Signal vorhanden sein, welches immer dann auftritt, wenn ein Werkstück erfolgreich gefertigt wurde, wie beispielsweise ein Signal zur Beförderung eines erfolgreich gefertigten Werkstücks in ein Magazin, der Anwender jedoch als Datum die Anzahl erfolgreich gefertigter Werkstücke haben muss.

Will der Anwender nun in das Steuerungsprogramm einen Zähler implementieren, welcher die erfolgreich gefertigten Werkstücke zählt, könnte er aus den positiven Flanken des Signals zur Beförderung erfolgreich gefertigter Werkstücke in ein Magazin den Zählwert bilden. Hierzu wäre es regelmäßig erforderlich, an der Stelle, an der ein Operand vorhanden ist, der immer dann den Wert 1 annimmt, wenn ein erfolgreich gefertigtes Werkstück in ein Magazin befördert wird, das Programm um ein Programmteil zu erweitern, welches einen Zähler darstellt, der in dem Steuerungszyklus, in dem der Operand erstmals den Wert 1 annimmt, d. h. beim Auftreten einer positiven Flanke des Operanden, um einen Wert erhöht wird.

Allgemein lässt sich sagen, dass es zur Aufbereitung von Rohdaten erforderlich ist, das Anwenderprogramm innerhalb der Steuerung zu ändern, um durch zusätzliche Elemente in diesem Steuerungsprogramm die Vorverarbeitung vorzunehmen, damit beispielsweise Endsystemen Daten in einer benötigten Art und Weise zur Verfügung gestellt werden können.

Dies ist jedoch nachteilig, da hierdurch Ressourcen der Steuerung genutzt werden müssen. Des Weiteren ist das Erstellen dieser zusätzlichen Programmteile häufig sehr aufwendig. Darüber hinaus müssen durch die Programmmodifikation gegebenenfalls schon in Betrieb genommene Anlagenteile neu getestet werden.

Es ist Aufgabe der Erfindung, ein eingangs genanntes Verfahren derart auszubilden, dass Rohdaten auf einfache Weise aufbereitet werden können.

Die Lösung dieser Aufgabe ergibt sich aus den Merkmalen des kennzeichnenden Teils des Anspruchs 1. Vorteilhafte Weiterbildungen der Erfindung ergeben sich aus den Unteransprüchen.

Gemäß der Erfindung ist ein Verfahren zur prozesssynchronen Aufbereitung von in einer zyklisch arbeitenden Steuerung vorhandenen Rohdaten, welche während eines Steuerungszyklus erfasst oder gebildet werden, dadurch gekennzeichnet, dass ein die Rohdaten enthaltender Operand markiert wird und ein Daten-Zugriffs-Objekt zur Verfügung gestellt wird, welches mit dem markierten Operanden verknüpft wird und mittels dem die Rohdaten des markierten Operanden aufbereitet werden.

Dadurch, dass ein die Rohdaten enthaltender Operand markiert wird und ein Daten-Zugriffs-Objekt zur Verfügung gestellt wird, welches mit dem markierten Operanden verknüpft wird und mittels dem die Rohdaten des markierten Operanden aufbereitet werden, lässt sich die Aufbereitung der Rohdaten außerhalb eines bereits erstellten Anwenderprogramms vornehmen. Statt in das Anwenderprogramm durch die Aufnahme eines zusätzlichen Programmteils, in dem die Rohdaten aufbereitet werden, einzugreifen, braucht in das Anwenderprogramm nicht mehr eingegriffen zu werden. Es ist lediglich erforderlich, einen betreffenden Operanden zu markieren, wodurch das Anwenderprogramm jedoch nicht verändert wird. Die Aufbereitung der Daten des betreffenden markierten Operanden erfolgt in dem Daten-Zugriffs-Objekt, welches außerhalb des Anwenderprogramms angeordnet ist. Durch die Verknüpfung des Daten-Zugriffs-Objekts mit dem markierten Operanden werden die Daten des Operanden dem Daten-Zugriffs-Objekt zur Verfügung gestellt, so dass sie vom Daten-Zugriffs-Objekt bearbeitet werden können. Durch die Bearbeitung der Daten des markierten Operanden im Daten-Zugriffs-Objekt werden die Rohdaten im Operanden nicht verändert. Ein Daten-Zugriffs-Objekt wird im Sinne eines Anwenderprogramms lediglich wie ein zusätzliches Attribut behandelt und modifiziert das Anwenderprogramm nicht. Das Anwenderprogramm selbst bemerkt nichts von dem Attribut, dieses wird nur zur automatischen Programmgenerierung benutzt.

Als sehr vorteilhaft hat sich eine Ausführungsform der Erfindung herausgestellt, bei der das Daten-Zugriffs-Objekt parametrierbar ist. Hierdurch lässt sich auf einfache Art und Weise die Datenvorverarbeitung in dem Daten-Zugriffs-Objekt beeinflussen. So kann einem als Zähler ausgebildeten Daten-Zugriffs-Objekt beispielsweise mitgeteilt werden, ob es den Zähler bei einer positiven Flanke oder bei einer negativen Flanke des Operanden erhöhen soll. Auch könnte beispielsweise eingestellt werden, ob der Zähler als 16-Bit-Zähler oder als 32-Bit-Zähler ausgebildet sein soll. Des Weiteren kann dem Daten-Zugriffs-Objekt eine Bezeichnung zugeordnet werden, wie dies in einer besonderen Ausführungsform der Erfindung vorgesehen ist. Mittels der Bezeichnung lässt sich das Daten-Zugriffs-Objekt auf einfache Weise in eine weitere Verarbeitung einbinden. Insbesondere lässt sich das Daten-Zugriffs-Objekt unter der Bezeichnung von einem übergeordneten System ansprechen, wie dies in einer weiteren besonderen Ausführungsform der Erfindung vorgesehen ist. Darüber hinaus lässt sich in einem Daten-Zugriffs-Objekt auch die Art der Überwachung eines Operanden beschreiben.

Als sehr vorteilhaft hat sich auch eine Ausführungsform der Erfindung herausgestellt, bei der das Daten-Zugriffs-Objekt als dialogfähiges Feld auf einem Display darstellbar ist. Hierdurch lässt sich das Daten-Zugriffs-Objekt auf einfache Weise verwenden. Es braucht lediglich auf dem Display dargestellt zu werden, wonach die entsprechenden Eingaben vorgenommen werden können. Dies erlaubt dem Anwender eine sehr einfache und komfortable Verwendung des Daten-Zugriffs-Objekts.

Bei einer weiteren besonderen Ausführungsform der Erfindung ist vorgesehen, dass das Daten-Zugriffs-Objekt aus einer Mehrzahl von vorkonfigurierten Daten-Zugriffs-Objekten auswählbar ist. Hierdurch erhält der Anwender die Möglichkeit, sich jeweils für seinen vorliegenden Anwendungsfall ein passendes Daten-Zugriffs-Objekt auszuwählen.

Sehr vorteilhaft ist es, dass mehrere Daten-Zugriffs-Objekte nebeneinander betreibbar sind. Hierdurch lassen sich eine Vielzahl unterschiedlicher Datenvorverarbeitungen realisieren. So ist es beispielsweise möglich, mittels eines ersten Daten-Zugriffs-Objekts die positive Flanke eines Operanden zur Inkrementierung eines Zählers zu verwenden, gleichzeitig aber auch mittels eines zweiten Daten-Zugriffs-Objekts zum Start einer Zeitmessung zu verwenden, welche den zeitlichen Abstand zwischen zwei aufeinander folgenden positiven Flanken misst. Wenngleich die Zeitmessung hierbei auch mittels eines zweiten Daten-Zugriffs-Objekts erfolgt, so ist es jedoch auch möglich, ein Daten-Zugriffs-Objekt zur Verfügung zu stellen, mittels dem einerseits die Anzahl positiver Flanken eines Operanden gezählt wird und andererseits der zeitliche Abstand zwischen zwei aufeinander folgenden positiven Flanken des Operanden gemessen wird.

Selbstverständlich ist die vorstehend beschriebene Implementierung eines Zählers nur ein Beispiel. Mittels Daten-Zugriffs-Objekten lassen sich in vielfältiger Weise die unterschiedlichsten Funktionen problemlos in ein fertiges Anwenderprogramm implementieren. So lassen sich beispielsweise aus im Steuerungsprogramm vorhandenen Messwerten mittels eines Daten-Zugriffs-Objekts Mittelwerte bilden oder aus Signalen, bei denen ein Pegelzustand eine Betriebsart einer Maschine beschreibt, die Maschinenlaufzeit aufsummieren oder auch ein Puls-Pausen-Verhältnis bilden.

Sehr vorteilhaft ist eine Ausführungsform der Erfindung, bei der aus dem Daten-Zugriffs-Objekt bzw. aus den Daten-Zugriffs-Objekten ein Code generiert und in einen Baustein abgelegt wird. Hierdurch lässt sich die Einbindung der Daten-Zugriffs-Objekte auf einfache Weise in die Steuerung vornehmen. So lassen sich die Bausteine beispielsweise in jedem Zyklus der Steuerung aufrufen, wodurch sichergestellt ist, dass in jedem Zyklus der Steuerung die betreffenden Operanden bewertet werden und eine Auswertung der betreffenden Operanden erfolgt.

Mittels des erfindungsgemäßen Verfahrens kann auf einfache Weise ein Zugriff auf Daten innerhalb eines Automatisierungssystems erfolgen, welche einer rudimentären Datenaufbereitung innerhalb der Steuerung bedürfen. Insbesondere lassen sich mittels des erfindungsgemäßen Verfahrens Daten, welche zum Betrieb von Visualisierungssystemen benötigt werden, aus innerhalb einer Steuerung vorliegenden Rohdaten erzeugen. D. h., mittels des erfindungsgemäßen Verfahrens lassen sich Daten in einer Steuerung so vorverarbeiten, dass darauf aufsetzende Systeme, wie beispielsweise Visualisierungssysteme, MES-Systeme oder Ähnliches, diese Daten weiterverarbeiten können, ohne sich um die technologischen Spezifika der zu verarbeitenden Daten kümmern zu müssen, wie dies beispielsweise der Fall ist, wenn eine Veränderung eines Signals schneller ist als die Abtastrate des weiter verarbeitenden Systems.

Weitere Einzelheiten, Merkmale und Vorteile der vorliegenden Erfindung ergeben sich aus der nachfolgenden Beschreibung eines besonderen Ausführungsbeispiels unter Bezugnahme auf die Zeichnung.

Es zeigen:
- Figur 1: einen Kontaktplan eines Netzwerks mit zwei Abfragen und einem Operanden,
- Figur 2: eine Display-Darstellung eines Daten-Zugriffs-Objekts und
- Figur 3: den wesentlichsten Programmteil des in Figur 1 dargestellten Daten-Zugriffs-Objekts.

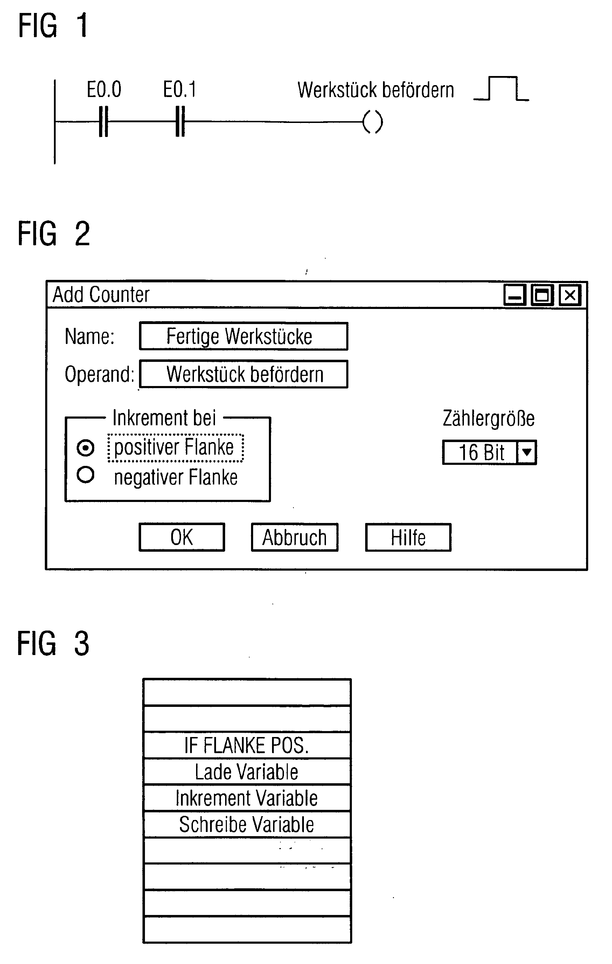

Bei dem in Figur 1 dargestellten Netzwerk werden die Eingänge E1.0 und E1.1 abgefragt. Sind beide Abfragen positiv, nimmt der Operand "Werkstück befördern" in dem betreffenden Zyklus der Steuerung den Wert 1 an. Der Wert des Operanden "Werkstück befördern" bleibt so lange 1, bis eine der beiden Abfragen E1.0 und E1.1 nicht mehr positiv ist. In dem Zyklus der Steuerung, in dem eine der Abfragen E1.0 und E1.1 nicht mehr positiv ist, nimmt der Operand "Werkstück befördern" den Wert Null an. Der zeitliche Verlauf des Operanden "Werkstück befördern" entspricht somit einem Rechteck, wie dies in Figur 1 rechts dargestellt ist. Die dargestellte Logik muss programmiert werden, um den Prozess zu steuern. Hier ist keine Logik aufgeführt, die zusätzlich zur Erfassung der Anzahl dient.

Stellt sich die Forderung, die Anzahl der Rechteckimpulse zu zählen, wird ein Daten-Zugriffs-Objekt "Add Counter" aufgerufen, wie dies in Figur 2 dargestellt ist. Dem in Figur 2 dargestellten Daten-Zugriffs-Objekt ist der Name "fertige Werkstücke" zugeordnet worden. Durch Eingabe der Bezeichnung des Operanden "Werkstück befördern" in das Feld "Operand" wird der Operand "Werkstück befördern" markiert und eine Verknüpfung des Operanden "Werkstück befördern" mit dem Daten-Zugriffs-Objekt "Add Counter" hergestellt. Die Eingabe kann manuell erfolgen oder beispielsweise durch Anklicken des Operanden "Werkstück befördern" mit einer Maus im dargestellten Netzwerk. Sofern der Zähler bei der positiven Flanke des Operanden "Werkstück befördern" inkrementiert werden soll, muss dies in dem Feld "Inkrement bei positiver Flanke" markiert werden. Des Weiteren ist in dem Feld "Zählergröße" noch angegeben worden, dass die Größe des Zählers 16 Bit sein soll. Ist das Daten-Zugriffs-Objekt "Add Counter" parametriert, wird dies durch Anklicken des Feldes "OK" bestätigt.

Wie sich dem in Figur 3 dargestellten Programmteil des in Figur 2 dargestellten Daten-Zugriffs-Objekts "Add Counter" entnehmen lässt, wird beim Aufrufen des Daten-Zugriffs-Objekts "Add Counter" zunächst abgefragt, ob beim Operanden "Werkstück befördern" eine positive Flanke aufgetreten ist. Ist dies der Fall, wird die Variable, unter der der Zählerstand abgelegt ist, geladen. Danach wird die Variable inkrementiert und im Anschluss daran abgespeichert.

Dieser Pseudocode beschreibt, was für die Realisierung dieses Zählers eigentlich möglich ist. Diese Funktionalität wird in dem Daten-Zugriffs-Objekt erledigt, ohne dass der Anwender dies in seinen eigentlichen Steuerungsanteil einzubringen hat.

## Patentansprüche

1. Verfahren zur prozesssynchronen Aufbereitung von in einer zyklisch arbeitenden Steuerung vorhandenen Rohdaten, welche während eines Steuerungszyklus erfasst oder gebildet werden, **dadurch gekennzeichnet, dass** ein die Rohdaten enthaltender Operand markiert wird und ein Daten-Zugriffs-Objekt zur Verfügung gestellt wird, welches mit dem markierten Operanden verknüpft wird und mittels dem die Rohdaten des markierten Operanden aufbereitet werden.

2. Verfahren nach Anspruch 1, **dadurch gekennzeichnet, dass** das Daten-Zugriffs-Objekt parametrierbar ist.

3. Verfahren nach Anspruch 1 oder 2, **dadurch gekennzeichnet, dass** dem Daten-Zugriffs-Objekt eine Bezeichnung zuordenbar ist.

4. Verfahren nach Anspruch 3, **dadurch gekennzeichnet, dass** das Daten-Zugriffs-Objekt unter der Bezeichnung von einem übergeordneten System ansprechbar ist.

5. Verfahren nach einem der Ansprüche 1 bis 4, **dadurch gekennzeichnet, dass** das Daten-Zugriffs-Objekt als dialogfähiges Feld auf einem Display darstellbar ist.

6. Verfahren nach einem der Ansprüche 1 bis 5, **dadurch gekennzeichnet, dass** das Daten-Zugriffs-Objekt aus einer Mehrzahl von vorkonfigurierten Daten-Zugriffs-Objekten auswählbar ist.

7. Verfahren nach einem der Ansprüche 1 bis 6, **dadurch gekennzeichnet, dass** mehrere Daten-Zugriffs-Objekte nebeneinander betreibbar sind.

8. Verfahren nach einem der Ansprüche 1 bis 7, **dadurch gekennzeichnet, dass** aus dem Daten-Zugriffs-Objekt bzw. den Daten-Zugriffs-Objekten ein Code generierbar und in einem Baustein ablegbar ist.

9. Verfahren nach Anspruch 8, **dadurch gekennzeichnet, dass** der Baustein in jedem Zyklus der Steuerung aufrufbar ist.

10. System, insbesondere Computersystem, mit wenigstens einem Prozessor und wenigstens einem Speicher, **dadurch gekennzeichnet, dass** der Speicher Daten zur Durchführung eines Verfahrens nach einem der Ansprüche 1 bis 9 enthält.

11. Datenträger, **dadurch gekennzeichnet, dass** er Daten zur Durchführung eines Verfahrens nach einem der Ansprüche 1 bis 9 enthält.
